# EUROPÄISCHE PATENTSCHRIFT

(11) **EP 3 549 900 B1**
(45) Veröffentlichungstag und Bekanntmachung des Hinweises auf die Patenterteilung: **05.04.2023**
(21) Anmeldenummer: 19160369.5
(22) Anmeldetag: 01.03.2019
(51) Int. Cl.: B66F 7/02, B66F 7/28

(54) **HEBEBÜHNE FÜR KRAFTFAHRZEUGE**
PNEUMATIC PLATFORM FOR MOTOR VEHICLES
ÉLÉVATEUR POUR VÉHICULES AUTOMOBILES

(30) Priorität: 12.03.2018 DE 102018105573
(43) Veröffentlichungstag der Anmeldung: 09.10.2019
(73) Patentinhaber: Nussbaum Automotive Lifts GmbH, 77694 Kehl (DE)
(72) Erfinder: Huber, Ludwig, 77731 Willstätt (DE); Nußbaum, Steffen, 67000 Straßburg (FR)
(74) Vertreter: LBP Lemcke, Brommer & Partner Patentanwälte mbB

(56) Entgegenhaltungen:
- DE-A1- 1 816 919

## Beschreibung

Die vorliegende Erfindung betrifft eine Hebebühne für Kraftfahrzeuge mit vier Tragarmen, die an einer Hubvorrichtung, insbesondere an zwei seitlichen Hubsäulen, schwenkbar gelagert sind und deren freie Enden unter Stützpunkte eines anzuhebenden Kraftfahrzeugs bewegbar sind, wobei die Tragarme ein erstes und ein zweites Tragarmpaar bilden und wobei zumindest die Tragarme des ersten Tragarmpaars längenverstellbar und als starre, lediglich um ihre Anlenkpunkte an der Hubvorrichtung schwenkbare Tragarme ausgeführt sind, während die Tragarme des zweiten Tragarmpaars als Doppelgelenkarme mit einem zusätzlichen Knickgelenk ausgebildet sind.

Sogenannte Säulenhebebühnen mit Tragarmen sind in verschiedenen Ausführungsformen bekannt. An den freien Enden der Tragarme befinden sich üblicherweise Tragteller, die unter die herstellerseitig vorgeschriebenen Stützpunkte an der Fahrzeugunterseite positioniert werden müssen. Da sich die Fahrzeugabmessungen und damit auch die Position der Stützpunkte unterschiedlicher Fahrzeuge erheblich unterscheiden, lassen sich die Tragarme teleskopisch in der Länge verstellen.

Daneben sind auch Säulenhebelbühnen bekannt, bei denen die vier Tragarme als Doppelgelenkarme ausgebildet sind, damit neben normalen Pkws auch grö-ßere Fahrzeuge wie insbesondere Transporter und Kleinlaster aufgenommen werden können, für die der Einstellbereich von geraden Teleskoptragarmen nicht ausreicht.

Des Weiteren sind auch Säulenhebelbühnen mit geraden Tragarmen bekannt, deren vordere Tragarme erheblich kürzer als die hinteren ausgeführt sind. Die Hubsäulen befinden sich in Bezug auf ein angehobenes Fahrzeug somit in Längsrichtung des Fahrzeugs gesehen nicht mittig des Fahrzeugs, sondern im vorderen Fahrzeugdrittel, sodass sich die Türen des Fahrzeugs ungehindert vollständig öffnen lassen.

Schließlich sind aus den Schriften DE 18 16 919, US 4,212,449 und DE 23 52 159 Säulenhebebühnen mit je zwei starren und zwei als Doppelgelenkarme ausgebildeten Tragarmen bekannt. Die Doppelgelenkarme sind hierbei jeweils gegenüber den starren Tragarmen kürzer ausgeführt. DE 18 16 919 offenbart den Oberbegriff des Anspruchs 1.

Bei herkömmlichen Hebebühnen mit Tragarmen besteht häufig das Problem, dass die Tragarme bei Reparaturarbeiten am Unterboden im Weg sind bzw. diese erschweren. Dies trifft insbesondere bei Kraftfahrzeugen mit Elektroantrieb zu, deren Batterien vermehrt im Fahrzeugboden verbaut werden. Wartung und Austausch solcher Batterien erfolgt dabei über Wartungsklappen, die sich meist am Unterboden der Kraftfahrzeuge befinden. Hierbei hat sich nun herausgestellt, dass bei verschiedenen Fahrzeugtypen mit Elektroantrieb die Tragarme herkömmlicher Hebebühnen ein Öffnen der Wartungsklappen am Fahrzeugunterboden behindern und somit Wartung und Austausch der Batterien erschweren.

Die vorliegende Erfindung hat sich daher zur Aufgabe gesetzt, eine Hebebühne für Kraftfahrzeuge anzugeben, welche flexibler einsetzbar, platzsparend und vor allem auch für Reparatur und Wartung von modernen Kraftfahrzeugen mit Elektroantrieb geeignet ist.

Die Aufgabe wird gelöst durch die Merkmale des Anspruchs 1. Vorteilhafte Ausgestaltungen sind in den abhängigen Ansprüchen zu entnehmen.

Bei einer Hebebühne mit vier Tragarmen, die an einer Hubvorrichtung, insbesondere an zwei seitlichen Hubsäulen schwenkbar gelagert sind und deren freie Enden unter Stützpunkten eines anzuhebenden Kraftfahrzeugs bewegbar sind, wobei die Tragarme ein erstes und ein zweites Tragarmpaar bilden und wobei zumindest die Tragarme des ersten Tragarmpaars längenverstellbar und als starre, lediglich um ihre Anlenkpunkte an der Hubvorrichtung schwenkbare Tragarme ausgeführt sind, während die Tragarme des zweiten Tragarmpaars als Doppelgelenkarme mit einem zusätzlichen Knickgelenk ausgebildet sind, ist erfindungsgemäß vorgesehen, dass die Tragarme des zweiten Tragarmpaars gegenüber den Tragarmen des ersten Tragarmpaares in eingeschobenem Zustand (d.h. eingeschobener Zustand sowohl der starren Tragarme als auch der Doppelgelenkarme, soweit diese auch teleskopisch ausfahrbar sein sollten) mindestens doppelt so lang sind und die Knickgelenke so ausgebildet sind, dass sich die Tragarme des zweiten Tragarmpaares ausgehend von einer maximal gestreckten Stellung des betreffenden Tragarms zur Positionierung unter die Stützpunkte eines anzuhebenden Kraftfahrzeugs horizontal in beide Richtungen abwinkeln lassen.

Auf diese Weise lassen sich Kraftfahrzeuge so aufnehmen, dass die Tragarme bei Reparaturarbeiten nicht im Wege sind. Dies wird insbesondere dadurch erreicht, dass die Knickgelenke der Tragarme des zweiten Tragarmpaares in beide Richtungen abwinkelt werden können. Insbesondere kann vorgesehen sein, dass zur Positionierung der hinteren Tragarme unter dem anzuhebenden Fahrzeug deren Knickgelenke nach innen in Richtung der jeweils gegenüberliegenden Hubsäule abgewinkelt werden können. Die hinteren Traggelenke können somit wahlweise so abgewinkelt werden, dass deren Knickgelenk nach Außen in Richtung weg von dem Fahrzeug weist, als auch nach Innen unter das Fahrzeug. Bei einer Abwinkelung des Knickgelenks nach Außen erhält man maximale Freiheit unter dem Fahrzeug für Arbeiten am Fahrzeugboden, während bei einer Abwinkelung der Knickgelenke nach Innen ein maximaler Arbeitsraum im Bereich der Schweller des Fahrzeugs freibleibt, beispielsweise für Schweißarbeiten am Schweller oder für Arbeiten an entlang des Schwellers verlegten Leitungen.

Das wahlweise Abwinkeln der Doppelgelenktragarme in beide Richtungen zum Aufnehmen eines Fahrzeugs wird dadurch möglich, dass die Tragarmlängen der beiden Tragarmpaare asymmetrisch ausgeführt werden, dergestalt, dass die Doppelgelenkarme des zweiten Tragarmpaars gegenüber den starren Tragarmen des ersten Tragarmpaars erheblich länger sind, denn nur so wird beim Abwinkeln der Doppelgelenkarme der erforderliche Platz unter dem Fahrzeug frei und die Tragarme der beiden Tragarmpaare sind sich nicht gegenseitig im Wege. Außerdem lässt sich ein Fahrzeug so aufnehmen, dass sich der Fahrzeugmittelpunkt und vor allem die Fahrzeugtüren im angehobenen Zustand vor der Hubvorrichtung und insbesondere den seitlichen Hubsäulen befinden und sich die Türen des angehobenen Fahrzeugs somit ungehindert vollständig öffnen lassen.

Neben einer Zwei-Säulenhebebühne sind auch andere Hebebühnen mit Tragarmen, beispielsweise etwa eine Stempel-Hebebühne oder eine Zwei-Stempel-Hebebühne im Rahmen der Erfindung möglich und umfasst.

Bei einer bevorzugten Ausführungsform sind die Tragarme des hinteren Tragarmpaars gegenüber den Tragarmen des vorderen Tragarmpaares um zumindest so viel länger ausgebildet, dass die Tragarme zum Anheben eines Kraftfahrzeugs so positioniert werden können, dass sich die Hubsäulen der Hebebühne auf Höhe oder sogar vor dessen A-Säule befinden. Somit ist sichergestellt, dass sich die Fahrzeugtüren eines in der Anhebeposition abgestellten Fahrzeugs auf jeden Fall öffnen lassen. Die Hubsäulen der Hebebühne können damit in dichterem Abstand zueinander angeordnet werden, sodass die Hebebühne schmaler gebaut werden kann. Dies führt wiederum dazu, dass auf derselben Werkstattfläche mehr Hebebühnen und zugehörige Montageplätze untergebracht werden können.

Vorzugsweise sind die Tragarme des vorderen Tragarmpaars als dreiteilige Teleskop-Tragarme ausgeführt. Dies ermöglicht einen weiten Einstellbereich.

Aus Sicherheitsgründen können die Knickgelenke der Doppelgelenkarme außerdem mit einer Tragarmarretierung versehen sein, die vor einem Anheben des Kraftfahrzeugs zur Sperrung des Knickgelenks aktivierbar ist bzw. aktiviert ist und die zum Einstellen der Tragarmposition gelöst wird.

Die hinteren Tragarme können ähnlich wie die vorderen Tragarme ebenfalls längenverstellbar ausgeführt sein. Allerdings ist dies nicht zwingend erforderlich. Die Positionierung der freien Enden der Tragarme kann alternativ auch dadurch erfolgen, dass lediglich Knickwinkel und Schwenkwinkel der hinteren Tragarme verändert wird.

Bei einer bevorzugten Ausführungsform sind jedoch auch die hinteren, als Doppelgelenkarme ausgeführten Tragarme längenverstellbar und weisen zu diesem Zweck einen hinteren Tragarmteil und einen mit diesem über das Knickgelenk verbundenen vorderen Tragarmteil auf, wobei der vordere Tragarmteil teleskopisch längenverstellbar ausgeführt ist. Die Längenverstellbarkeit des Doppelgelenkarms lässt sich so auf technisch einfache Weise realisieren und die hinteren Tragarme ermöglichen hierdurch eine noch flexiblere Positionierung an die modellabhängigen Stützpunkte unterschiedlicher Fahrzeuge und benötigen zudem weniger Platz. Insbesondere kann hierbei vorgesehen sein, dass der jeweils vordere Tragarmteil an seinem freien Ende einen Aufnahmeteller trägt, mit dem das Kraftfahrzeug an seinen Stützpunkten angehoben wird.

Während die Tragsarme des vorderen Tragarmpaars bevorzugt als dreiteilige Teleskoparme ausgeführt sind, reicht als Längenverstellung der hinteren Tragarme aus, dass deren vorderer Tragarmteil als zweiteiliger Teleskoparm ausgebildet ist.

Ein weiterer Vorteil ergibt sich bei einer Hebebühne mit zwei Hubsäulen, indem die Anlenkpunkte der kürzen, starren Tragarme des ersten Tragarmpaares an der inneren, zur gegenüberliegenden Hubsäule weisenden Seite der Hubsäulen angebracht sind, während sich die Anlenkpunkte der Doppelgelenktragarme an einer in Einfahrtrichtung gesehen vor- oder rückwärtigen Seite der Hubsäulen befinden. Auf diese Weise ergibt sich eine maximale Bewegungsfreiheit für die starren Tragarme des ersten Tragarmpaares und ein größtmöglicher Reichweiten- bzw. Einstellbereich unterhalb eines anzugebenden Fahrzeugs für die Doppelgelenkarme des zweiten Tragarmpaares.

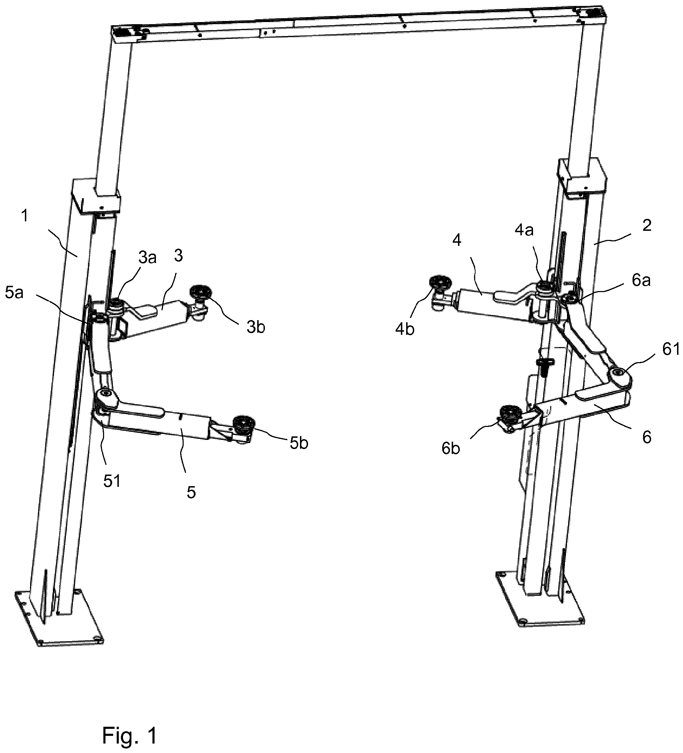

Weitere Vorteile und Eigenschaften der Erfindung werden anhand der Ausführungsbeispiele und der beigefügten Zeichnungen beschrieben. Hierbei zeigt:
- .Figur 1: eine Zwei-Säulen-Hebebühne mit zwei starren Tragarmen und zwei Doppelgelenktragarmen,
- Figur 2: eine Draufsicht auf die Hebebühne aus Figur 1,
- Figur 3: eine vergrößerte Ansicht eines Doppelgelenktragarmes der Hebebühne aus Figur 1,
- Figur 4: Stützpositionen der Tragteller für unterschiedliche Fahrzeugtypen in Bezug auf die Hebebühne aus Figur 1,
- Figur 5: die Hebebühne aus Figur 1 mit nach Innen abgewinkelten Knickgelenken,
- Figur 6: eine Draufsicht auf die Hebebühne in der in Figur 5 gezeigten Tragarmeinstellung,
- Figur 7: ein zweites Ausführungsbeispiel einer Zwei-Säulen-Hebebühne, bei dem die Knickgelenke der Doppelgelenkarme nach außen gewinkelt sind,
- Figur 8: die Hebebühne aus Figur 7 mit nach innen eingewinkelten Doppelgelenkarmen,
- Figur 9: ein horizontaler Schnitt durch die Hebebühne in der in Figur 7 dargestellten Position, wobei die Schnittebene durch die Hubsäulen oberhalb der Tragarme verläuft,
- Figur 10: eine Figur 9 entsprechende Darstellung der Hebebühne in der in Figur 8 gezeigten Position.

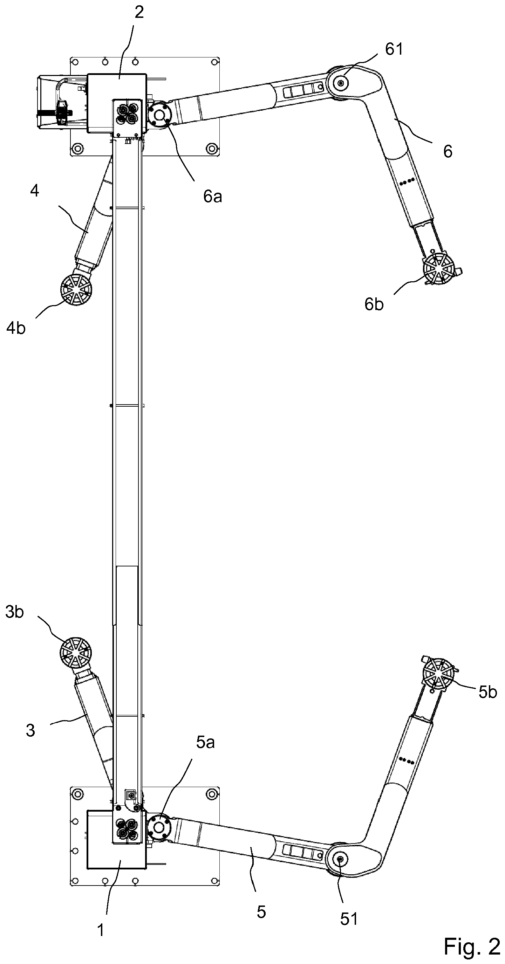

Die in den Figuren 1 und 2 gezeigte Hebebühne umfasst zwei Hubsäulen 1, 2, an denen jeweils zwei Tragarme 3, 5 bzw. 4, 6 schwenkbar angelenkt sind. Die Tragarme 3, 5, 4, 6 sind höhenverstellbar, das heißt können angehoben und abgesenkt werden. Der Hubantrieb innerhalb der Hubsäulen 1, 2 erfolgt in an sich bekannter Weise, beispielsweise mittels Zylinderkolbenaggregaten, mittels einer Gewindespindel oder mittels eines Kettenantriebs.

Die Tragarme 3, 4 bilden ein vorderes Tragarmpaar, das heißt dienen zum Anheben der vorderen Fahrzeughälfte und die Tragarme 5, 6 bilden ein Tragarmpaar für die hintere Fahrzeughälfte. Die Tragarme 3 und 5 der linken Fahrzeugseite sind spiegelbildlich zu den Tragarmen 4 und 6 der rechten Fahrzeugseite angeordnet. Die Tragarme sind jeweils über ein Schwenklager 3a, 4a, 5a, 6a schwenkbar an ihrer zugehörigen Hubsäule 1, 2 gelagert, sodass sie unter ein zwischen die Hubsäulen 1, 2 abgestelltes Fahrzeug untergeschwenkt und zu den Stützpunkten am Fahrzeugboden bewegt werden können.

An den freien Enden der Tragarme 3, 4, 5, 6 sind in üblicher Weise Tragteller 3b, 4b, 5b, 6b mit Gummipuffern angeordnet, die beim Anheben der Tragarme in Anlage mit dem Fahrzeug kommen. Über ein Gewinde können die Tragteller 3b, 4b, 5b, 6b gegenüber den zugehörigen Tragarmen 3, 4, 5, 6 auch im gewissen Umfang in der Höhe verstellbar sein.

Die Tragarme 3, 4 des vorderen Tragarmpaars sind als herkömmliche starre Tragarme ausgeführt, das heißt sie sind lediglich um ihren jeweiligen Anlenkpunkt 3a, 4a an den Säulen 1, 2 verschwenkbar. Außerdem können die vorderen Tragarme 3, 4 teleskopisch in der Länge verstellt werden. Der Verstellbereich der vorderen Tragarme 3, 4 beträgt im Ausführungsbeispiel zwischen 570 mm im vollständig eingeschobenen Zustand und 1160 mm im vollständig ausgeschobenen Zustand. Um diesen weiten Verstellbereich zu erreichen, sind die vorderen Tragarme 3, 4 als dreiteilige Teleskope aufgebaut, das heißt sie bestehen aus drei teleskopisch ineinandergeschobenen Rechteckprofilen. Endanschläge im Inneren der Teleskopprofile verhindern, dass die Tragarme 3, 4 weiter als zulässig ausgezogen werden können.

Im Gegensatz zu den vorderen Tragarmen 3, 4 sind die Tragarme 5, 6 des hinteren Tragarmpaars als Doppelgelenkarme ausgebildet. Diese sind mit einem zusätzlichen Knickgelenk 51, 61 versehen, um das der jeweilige Tragarm 5, 6 in seiner durch das Schwenkgelenk 5a, 6a definierten Schwenkebene abgewinkelt werden kann.

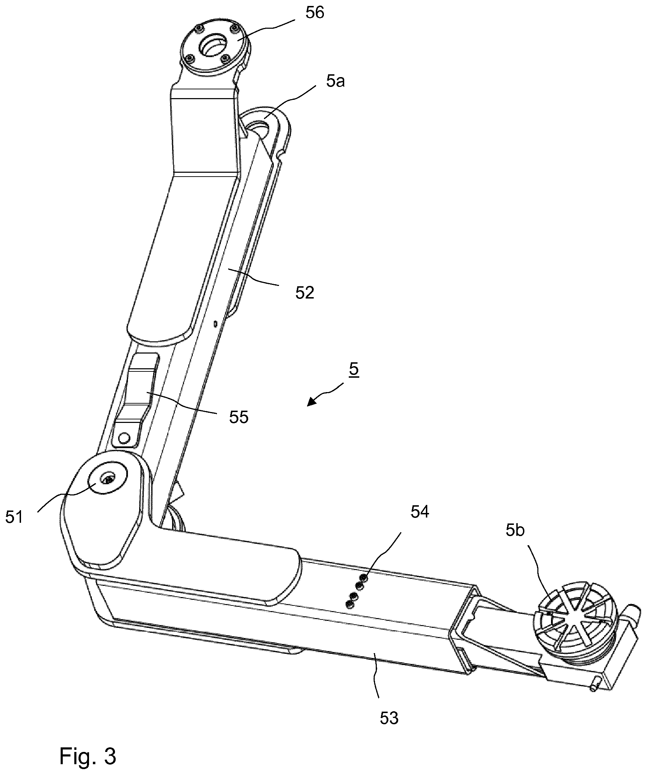

Der linke Doppelgelenkarm 5 ist in Figur 3 vergrößert dargestellt. Der Tragarm 5 umfasst einen hinteren Teilarm bzw. Tragarmteil 52, der über das Schwenklager 5a mit der Hubsäule 1 verbunden wird und über das Knicklager 51 mit einem vorderen Teilarm 53 gelenkig verbunden ist. Der vordere Teilarm 53 ist teleskopisch längenverstellbar und trägt an seinem vorderen, freien Ende den Aufnahmeteller 5b. Der Teleskopmechanismus des vorderen Teilarms 53 ist zweiteilig ausgeführt, das heißt er umfasst ein äußeres und ein inneres Teleskopprofil, die ineinandergeschoben werden können. Auf der Innenseite des äußeren Teleskopprofils ist ein Endanschlag verschraubt, von dem in Figur 3 nur die äußeren Befestigungsschrauben 54 dargestellt sind und der den Auszugsbereich des teleskopischen Teilarms 53 begrenzt. Im Ausführungsbeispiel beträgt die maximale Länge der hinteren Tragarme 5, 6 bei gestrecktem Knickgelenk 51, 61 maximal 1825 mm.

Selbstverständlich ist die Erfindung nicht auf einen zweiteiligen Teleskopauszug der hinteren Tragarme 5, 6 beschränkt, vielmehr können, wenn dies zweckmäßig erscheint, auch die hinteren Tragarme 5, 6 mit einem dreiteiligen Teleskopauszug versehen werden.

Das Knickgelenk 51 des Doppelgelenkarms 5 ist mit einer Tragarmarretierung versehen, welche das Knickgelenk 51 beim Anheben eines Kraftfahrzeugs sperrt. Über einen Betätigungshebel 55 kann die Tragarmarretierung zur Verstellung des Tragarms entriegelt werden. Die Tragarmarretierung wird hier von einer im Inneren des Knickgelenks 51 angeordneten Zahnscheibe mit Umfangseitiger Zahnung und einem über den Entriegelungshebel 55 betätigbaren Sperrglied gebildet, welches zwischen die Zähne der Zahnscheibe eingreift und eine Drehbewegung sperrt bzw. in angehobenem Zustand freigibt.

Auf ähnliche Weise sind auch die Schwenkgelenke 3a, 4a, 5a, 6a, mit denen die Tragarme 3, 4, 5, 6 an den Hubsäulen 1, 2 angelenkt sind, arretierbar. Hierzu kann beispielsweise die in Figur 3 an dem Schwenklager 5a angeordnete Scheibe 56 als Zahnscheibe mit einer umfangseitigen Zahnung versehen sein, in die ein an der Hubsäule 1 angeordnetes Sperrglied eingreift, um eine Schwenkbewegung des Tragarms 5 zu sperren.

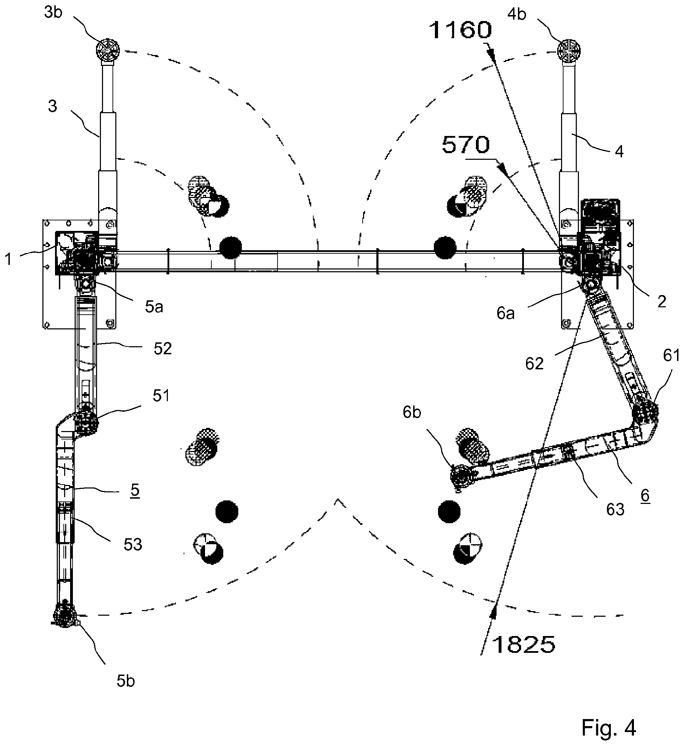

In Figur 4 sind beispielhaft herstellerseitig vorgegebene Positionen der Stützpunkte für unterschiedliche Fahrzeugtypen eingezeichnet. Man erkennt, dass die hinteren Tragarme 5, 6 zum Anfahren einer solchen Stützposition stark abgewinkelt sind. Somit verlaufen die hinteren Tragarme 5, 6 nicht quer über den Unterboden, sodass Wartungsklappen am Fahrzeugunterboden, wie sie etwa für Batterien eines Elektroantriebs benötigt werden, frei zugänglich bleiben. Außerdem erkennt man den dreiteiligen Teleskopauszug der vorderen Tragarme 3, 4.

Durch die asymmetrischen Tragarmlängen, das heißt kürzere vordere Tragarme 3, 4 und längere, abwinkelbare hintere Tragarme 5, 6, kann ein zwischen den Hubsäulen 1, 2 abgestelltes Fahrzeug so angehoben werden, dass sich die Fahrzeugmitte und vor allem die Fahrzeugtüren in Einfahrtrichtung vor den Hubsäulen 1, 2 befinden. Bei einem angehobenen Fahrzeug befinden sich die Hubsäulen 1, 2 typischerweise in etwa auf Höhe von dessen A-Säule oder sogar davor, sodass sich die Fahrzeugtüren öffnen lassen, ohne dass die Hubsäulen 1, 2 im Wege wären. Die Hebebühne kann auf diese Weise sehr schmal mit eng beieinanderstehenden Hubsäulen 1, 2 aufgebaut werden. Im Ausführungsbeispiel beträgt die Breite der Hebebühne lediglich etwa 3 m.

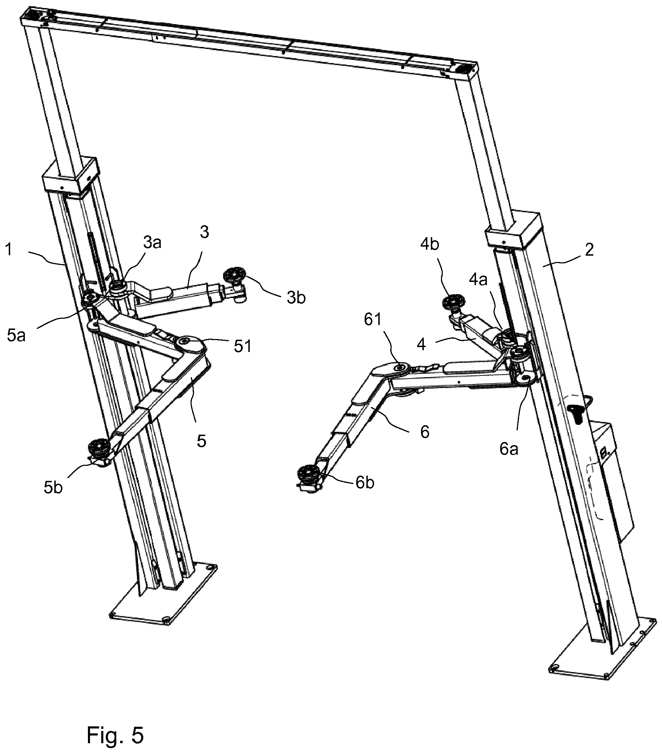

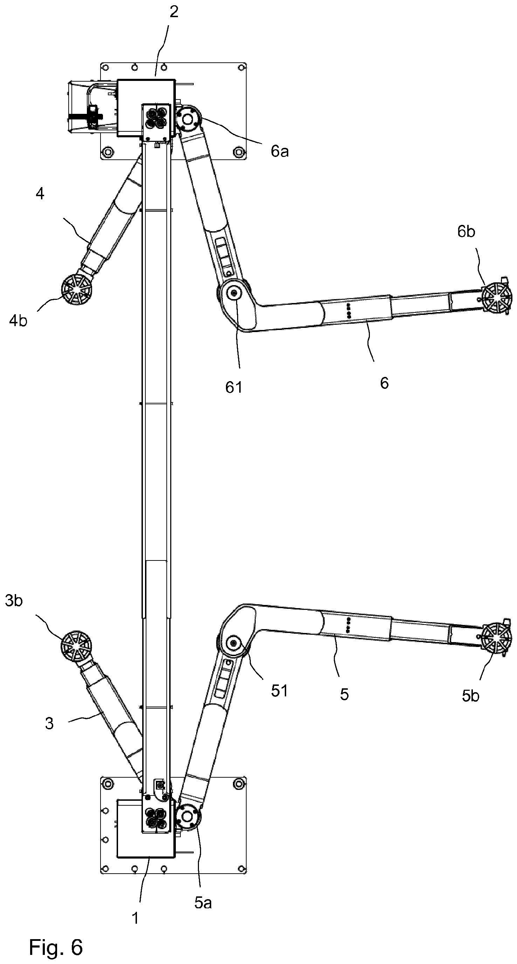

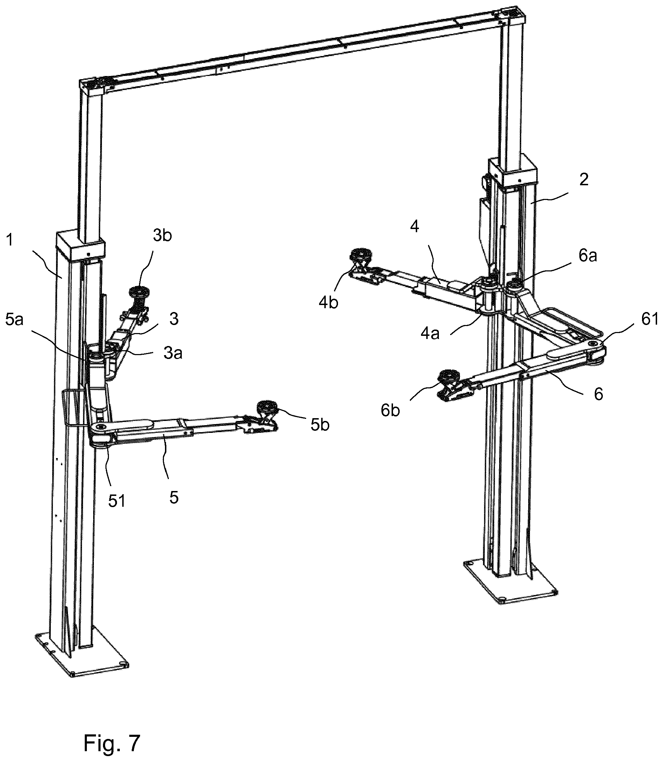

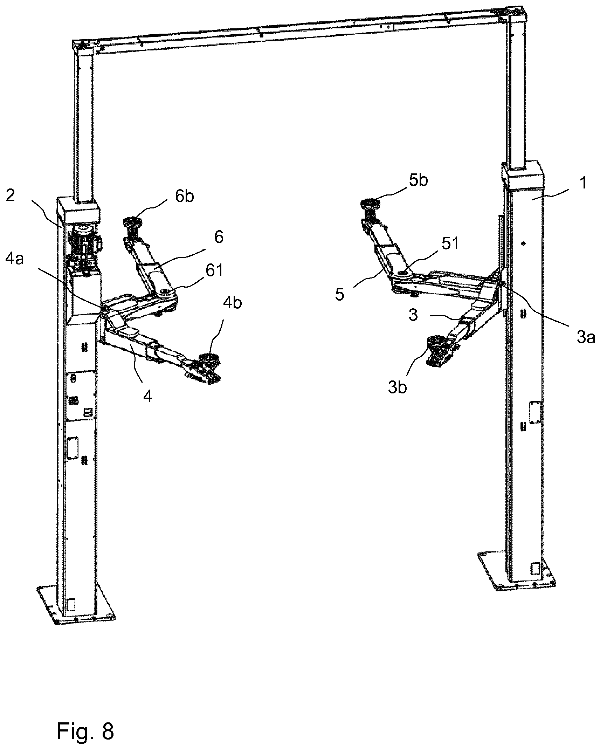

In den Figuren 5 und 6 ist entsprechend den Figuren 1 und 2 die Hebebühne dargestellt, jedoch in einer Stellung, in der die Knickgelenke 51, 61 der hinteren Tragarme 5, 6 nach Innen abgewinkelt wurden. Zu diesem Zweck sind die Knickgelenke 51, 61 so aufgeführt, dass sie keinen Anschlag in eine der beiden möglichen Knickrichtungen - nach Innen oder nach Außen - aufweisen, sondern frei in beide Richtungen beweglich sind. Die Knickgelenke ermöglichen also eine Auslenkung der vorderen Tragarmteile 53, 63 um insgesamt fast 360°. Bei der in den Figuren 5 und 6 gezeigten Stellung der hinteren Tragarme befinden sich die Knickgelenke 51, 61 und der größte Teil der hinteren Tragarme 5, 6 unter dem Fahrzeugboden, so dass sich ein größerer freier Arbeitsraum im Bereich der seitlichen Schweller des angehobenen Fahrzeugs ergibt. Statt als gewinkelte Gelenke wie in den Figuren 1 bis 6 gezeigt, können die Knickgelenke 51, 61 zu diesem Zweck alternativ auch als gerade Gelenke ausgeführt sein. Eine solche Ausführungsform ist im zweiten Ausführungsbeispiel in den Figuren 7 bis 10.

In dem in Figuren 7 bis 10 gezeigten zweiten Ausführungsbeispiel einer Zwei-Säulen-Hebebühne sind gleiche bzw. entsprechende Merkmale mit den gleichen Bezugszeichen wie im ersten Ausführungsbeispiel versehen. Im Gegensatz zum ersten Ausführungsbeispiel sind die Knickgelenke 51, 61 der beiden Doppelgelenkarme 5, 6 wie gesagt als gerade, also nicht gewinkelte Gelenke ausgeführt. Dies ermöglich einen noch größeren Schwenkbereich der beiden vorderen Tragarmteile 53, 63 in beide Schwenkrichtungen. Zur besseren Bedienbarkeit ist an den hinteren Tragarmteilen 52, 62 außerdem jeweils ein als Griff dienender Bügel 57, 67 angeschweißt.

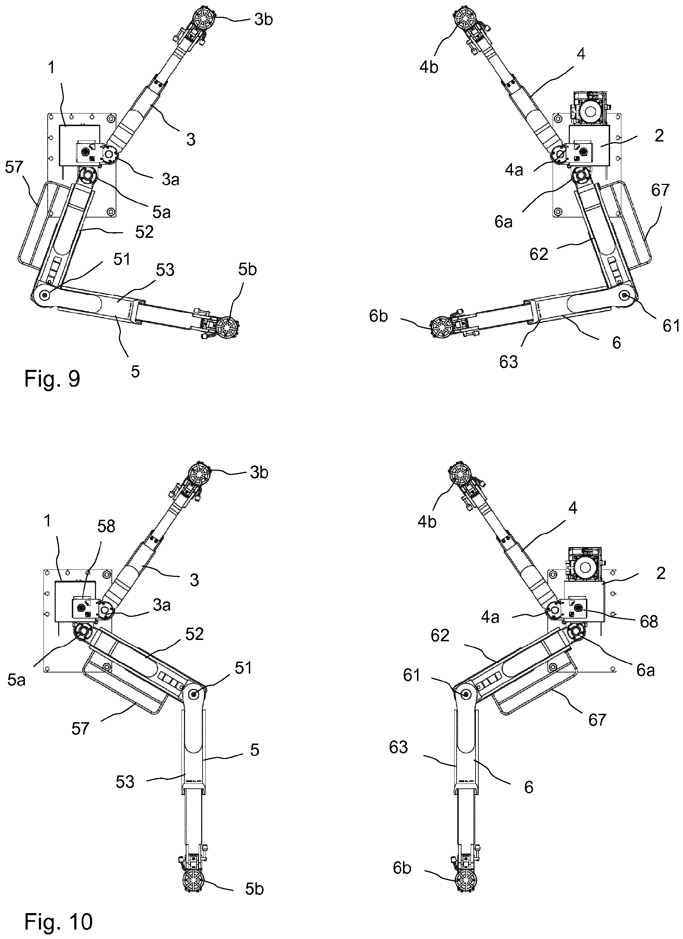

In den in Figuren 9 und 10 gezeigten Schnittansichten erkennt man, dass die kurzen, starren Tragarme 3, 4 an der Innenseite der beiden Hubsäulen 1, 2 angelenkt sind, während die Anlenkpunkte 5a, 6a der beiden Doppelgelenkarme 5, 6 sich an der in Einfahrtrichtung gesehen hinteren Seite der Hubsäulen 1, 2 befinden. Die Schwenkgelenke 3a, 5a bzw. 4a, 6a der Tragarme 3, 5 bzw. 4, 6 sind hierbei in an sich bekannter Weise an einem entlang der jeweiligen Hubsäulen 1 bzw. 2 in der Höhe verfahrbaren und in der Hubsäule entlang des Hubweges geführten Schlitten 58, 68 angebracht. Über den Hubmechanismus (Hydraulikantrieb, Spindel- oder Kettenantrieb) wird dieser Schlitten 58, 68 zum Anheben bzw. Absenken der Tragarme 5, 6 in der Höhe verstellt.

## Patentansprüche

1. Hebebühne für Kraftfahrzeuge, mit vier Tragarmen (3, 4, 5, 6), die an einer Hubvorrichtung (1, 2) schwenkbar gelagert sind und deren freie Enden unter Stützpunkte eines anzuhebenden Kraftfahrzeugs bewegbar sind, wobei die Tragarme (3, 4, 5, 6) ein erstes, insbesondere vorderes und ein zweites, insbesondere hinteres Tragarmpaar bilden, wobei zumindest die Tragarme (3, 4) des ersten Tragarmpaars längenverstellbar und als starre, lediglich um ihre Anlenkpunkte (3a, 4a) an der Hubvorrichtung (1, 2) schwenkbare Tragarme ausgeführt sind, während die Tragarme (5, 6) des zweiten Tragarmpaars als Doppelgelenkarme mit einem zusätzlichen Knickgelenk (51, 61) ausgebildet sind,
**dadurch gekennzeichnet, dass**
die Tragarme (5, 6) des zweiten Tragarmpaars gegenüber den Tragarmen (3, 4) des ersten Tragarmpaares in eingeschobenem Zustand mindestens doppelt so lang sind und die Knickgelenke (51, 61) so ausgebildet sind, dass sich die Tragarme (5, 6) des zweiten Tragarmpaares ausgehend von einer maximal gestreckten Stellung des betreffenden Tragarms zur Positionierung unter die Stützpunkte eines anzuhebenden Kraftfahrzeugs horizontal in beide Richtungen abwinkeln lassen.

2. Hebebühne nach Anspruch 1, bei der die Knickgelenke (51, 61) der Doppelgelenkarme mit einer Tragarmarretierung (55) versehen sind, die vor einem Anheben des Kraftfahrzeugs zur Sperrung des Knickgelenks (51, 61) aktivierbar ist.

3. Hebebühne nach einem der vorangehenden Ansprüche, bei der zumindest die Tragarme (3, 4) des ersten Tragarmpaars als dreiteilige Teleskop-Tragarme ausgeführt sind.

4. Hebebühne nach einem der vorangehenden Ansprüche, bei der die Doppelgelenkarme (5, 6) einen hinteren Tragarmteil (52) und einen mit diesem über das Knickgelenk (51) verbundenen vorderen Tragarmteil (53) aufweisen, wobei der vordere Tragarmteil (53) teleskopisch längenverstellbar ausgeführt ist.

5. Hebebühne nach Anspruch 4, bei dem der vordere Tragarmteil (53) als zweiteiliger Teleskop-Arm ausgeführt ist.

6. Hebebühne nach einem der vorangehenden Ansprüche, bei der zur Positionierung der Tragarme (5, 6) des zweiten Tragarmpaars unter dem anzuhebenden Fahrzeug deren Knickgelenke (51, 61) nach innen in Richtung des jeweils gegenüberliegenden Tragarms (5, 6) abgewinkelt werden können.

7. Hebebühne nach einem der vorangehenden Ansprüche, bei der die Hubvorrichtung zwei seitliche Hubsäulen (1, 2) umfasst.

8. Hebebühne nach Anspruch 7, bei der die Anlenkpunkte der Tragarme (3, 4) des ersten Tragarmpaares an einer inneren, zur gegenüberliegenden Hubsäule weisenden Seite der Hubsäulen (1, 2) angebracht sind, während sich die Anlenkpunkte (5a, 6a) der Tragarme (5, 6) des zweiten Tragarmpaars an einer in Einfahrtrichtung gesehen vor- oder rückwärtigen Seite der Hubsäulen (1, 2) befinden.

9. Hebebühne nach Anspruch 7 oder 8, bei der die Tragarme (5, 6) des zweiten Tragarmpaars gegenüber den Tragarmen (3, 4) des ersten Tragarmpaares um zumindest so viel länger ausgebildet sind, dass die Tragarme (3, 4, 5, 6) zum Anheben eines Kraftfahrzeugs so positioniert werden können, dass sich die Hubsäulen (1, 2) der Hebebühne auf Höhe oder vor dessen A-Säule befinden.

## Claims

1. Lifting platform for motor vehicles, having four supporting arms (3, 4, 5, 6) which are pivotably mounted on a lifting device (1, 2) and the free ends of which are movable under support points of a motor vehicle to be lifted, wherein the supporting arms (3, 4, 5, 6) form a first, in particular front, and a second, in particular rear, pair of supporting arms, wherein at least the supporting arms (3, 4) of the first pair of supporting arms are adjustable in length and are designed as rigid supporting arms which are pivotable solely about their articulation points (3a, 4a) on the lifting device (1, 2), while the supporting arms (5, 6) of the second pair of supporting arms are designed as double-jointed arms having an additional articulated joint (51, 61),
**characterised in that**
the supporting arms (5, 6) of the second pair of supporting arms are at least twice as long as the supporting arms (3, 4) of the first pair of supporting arms in the retracted state, and the articulated joints (51, 61) are configured such that, for positioning under the support points of a motor vehicle to be lifted, the supporting arms (5, 6) of the second pair of supporting arms, starting from a maximally extended position of the relevant supporting arm, can be bent horizontally in both directions.

2. Lifting platform according to claim 1, in which the articulated joints (51, 61) of the double-jointed arms are provided with a supporting arm detent (55) which can be activated to lock the articulated joint (51, 61) before the motor vehicle is lifted.

3. Lifting platform according to any of the preceding claims, in which at least the supporting arms (3, 4) of the first pair of supporting arms are three-part telescopic supporting arms.

4. Lifting platform according to any of the preceding claims, in which the double-jointed arms (5, 6) have a rear supporting arm part (52) and a front supporting arm part (53) connected thereto by way of the articulated joint (51), wherein the front supporting arm part (53) is telescopically adjustable in length.

5. Lifting platform according to claim 4, in which the front supporting arm part (53) is a two-part telescopic arm.

6. Lifting platform according to any of the preceding claims, in which, in order to position the supporting arms (5, 6) of the second pair of supporting arms under the vehicle to be lifted, the articulated joints (51, 61) thereof can be bent inwards in the direction of the opposite supporting arm (5, 6) in each case.

7. Lifting platform according to any of the preceding claims, in which the lifting device comprises two lateral lifting columns (1, 2).

8. Lifting platform according to claim 7, in which the articulation points of the supporting arms (3, 4) of the first pair of supporting arms are located on an inner side of the lifting columns (1, 2) that faces the opposite lifting column, while the articulation points (5a, 6a) of the supporting arms (5, 6) of the second pair of supporting arms are located on a front or rear side of the lifting columns (1, 2) as seen in the direction of entry.

9. Lifting platform according to claim 7 or 8, in which the supporting arms (5, 6) of the second pair of supporting arms are longer than the supporting arms (3, 4) of the first pair of supporting arms by at least an amount such that, in order to lift a motor vehicle, the supporting arms (3, 4, 5, 6) can be positioned so that the lifting columns (1, 2) of the lifting platform are at the level of or in front of the A-pillar of the motor vehicle.

## Revendications

1. Pont élévateur pour véhicules automobiles, avec quatre bras de support (3, 4, 5, 6) qui sont montés de manière pivotante sur un dispositif de levage (1, 2) et dont les extrémités libres peuvent être déplacées sous des points d'appui d'un véhicule automobile à lever, dans lequel les bras de support (3, 4, 5, 6) forment une première paire de bras de support, en particulier avant, et une seconde paire de bras de support, en particulier arrière, dans lequel au moins les bras de support (3, 4) de la première paire de bras de support sont réglables en longueur et réalisés sous forme de bras de support rigides, pouvant pivoter uniquement autour de leurs points d'articulation (3a, 4a) sur le dispositif de levage (1, 2), tandis que les bras de support (5, 6) de la seconde paire de bras de support sont réalisés sous forme de bras à double articulation avec une articulation supplémentaire (51, 61),
**caractérisé en ce que**
les bras de support (5, 6) de la seconde paire de bras de support sont au moins deux fois plus longs que les bras de support (3, 4) de la première paire de bras de support à l'état inséré et les articulations (51, 61) sont conçues de sorte que les bras de support (5, 6) de la seconde paire de bras de support peuvent être coudés horizontalement dans les deux directions en partant d'une position étirée maximale du bras de support concerné pour le positionnement sous les points d'appui d'un véhicule automobile à lever.

2. Pont élévateur selon la revendication 1, dans lequel les articulations (51, 61) des doubles bras articulés sont dotées d'un dispositif de blocage de bras de support (55), qui peut être activé avant un levage du véhicule automobile pour bloquer l'articulation (51, 61).

3. Pont élévateur selon l'une quelconque des revendications précédentes, dans lequel au moins les bras de support (3, 4) de la première paire de bras de support sont réalisés sous forme de bras de support télescopiques en trois parties.

4. Pont élévateur selon l'une quelconque des revendications précédentes, dans lequel les doubles bras articulés (5, 6) présentent une partie de bras de support arrière (52) et une partie de bras de support avant (53) connectée à celle-ci par l'intermédiaire de l'articulation (51), dans lequel la partie de bras de support avant (53) est réalisée pour être réglable en longueur de manière télescopique.

5. Pont élévateur selon la revendication 4, dans lequel la partie de bras de support avant (53) est réalisée sous la forme d'un bras télescopique en deux parties.

6. Pont élévateur selon l'une quelconque des revendications précédentes, dans lequel, pour positionner les bras de support (5, 6) de la seconde paire de bras de support sous le véhicule à soulever, leurs articulations (51, 61) peuvent être coudées vers l'intérieur en direction du bras de support (5, 6) respectivement opposé.

7. Pont élévateur selon l'une quelconque des revendications précédentes, dans lequel le dispositif de levage comprend deux colonnes de levage latérales (1, 2).

8. Pont élévateur selon la revendication 7, dans lequel les points d'articulation des bras de support (3, 4) de la première paire de bras de support sont situés sur un côté intérieur des colonnes de levage (1, 2), orienté vers la colonne de levage opposée, tandis que les points d'articulation (5a, 6a) des bras de support (5, 6) de la seconde paire de bras de support sont situés sur un côté avant ou arrière des colonnes de levage (1, 2), vu dans la direction d'entrée.

9. Pont élévateur selon la revendication 7 ou 8, dans lequel les bras de support (5, 6) de la seconde paire de bras de support sont plus longs par rapport aux bras de support (3, 4) de la première paire de bras de support au moins suffisamment pour que les bras de support (3, 4, 5, 6) puissent être positionnés pour lever un véhicule automobile de sorte que les colonnes de levage (1, 2) du pont élévateur se trouvent au niveau ou devant le montant A de celui-ci.
